(19) Europäisches Patentamt
European Patent Office
Office européen des brevets

(11) **EP 3 777 342 B1**

(12) **EUROPEAN PATENT SPECIFICATION**

(45) Date of publication and mention
of the grant of the patent:
**31.07.2024 Bulletin 2024/31**

(21) Application number: **18717300.0**

(22) Date of filing: **05.04.2018**

(51) International Patent Classification (IPC):
**H04W 48/20** (2009.01)   **H04W 36/32** (2009.01)
**H04W 84/00** (2009.01)   **H04W 36/08** (2009.01)
**H04W 36/00** (2009.01)   **H04B 7/0404** (2017.01)
**H04B 7/06** (2006.01)   **H04B 7/08** (2006.01)

(52) Cooperative Patent Classification (CPC):
**H04W 48/20; H04B 7/0617; H04W 36/322;**
H04W 36/0061; H04W 36/083; H04W 84/005

(86) International application number:
**PCT/EP2018/058763**

(87) International publication number:
**WO 2019/192709 (10.10.2019 Gazette 2019/41)**

(54) **NETWORK ACCESS NODES AND CLIENT DEVICE FOR REPORTING OF MOBILITY INFORMATION OF A NETWORK ACCESS NODE**

NETZZUGANGSKNOTEN UND CLIENT-VORRICHTUNG ZUR MELDUNG VON MOBILITÄTSINFORMATIONEN EINES NETZZUGANGSKNOTENS

NOEUDS D'ACCES AU RESEAU ET DISPOSITIF CLIENT POUR RAPPORTER DES INFORMATIONS DE MOBILITE D'UN NOEUD D'ACCES AU RESEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.02.2021 Bulletin 2021/07**

(73) Proprietor: **HUAWEI TECHNOLOGIES CO., LTD.
Shenzhen, Guangdong 518129 (CN)**

(72) Inventors:
• **WANG, Neng**
**16440 Kista (SE)**
• **LINDOFF, Bengt**
**16440 Kista (SE)**
• **TUMULA, Chaitanya**
**16440 Kista (SE)**

(74) Representative: **Isarpatent
Patent- und Rechtsanwälte Barth
Charles Hassa Peckmann & Partner mbB
Postfach 44 01 51
80750 München (DE)**

(56) References cited:
EP-A2- 1 138 164          WO-A1-2013/025166
JP-A- 2002 152 114        US-A1- 2006 223 573
US-A1- 2009 046 006       US-A1- 2012 058 763
US-A1- 2013 059 589       US-A1- 2013 084 884
US-A1- 2015 045 048       US-A1- 2015 334 614
US-A1- 2016 302 142       US-A1- 2017 302 368

## Description

### Technical Field

The invention relates to a first network access node for efficient receive beam management based on reporting of mobility information. Furthermore, the invention also relates to a corresponding method and a computer program.

### Background

Traditionally, frequencies below 6 GHz are used for wireless communication. However, frequency spectrum suitable for wireless communication is scarce, and there is a need for finding more frequency spectrum for supporting the exponentially growing data usage in wireless communication networks. One way to address this problem is utilizing frequencies above 6 GHz. In the new radio (NR) systems, carrier frequencies above 6 GHz are introduced for wireless communication between a network access node and a client device such as a user equipment (UE).

In wireless communication networks using frequencies above 6 GHz, i.e. mmWave frequencies, the transmitter and receiver may use an antenna structure with analog-digital precoding at the transmitter and analog-digital combining at the receiver. The receiver may be equipped with multiple antenna arrays each comprising multiple antenna elements. By adjusting the phase values of different phase shifters, the receive antenna beam can be steered in a given direction that can be referred to as the look angle. In the literature, the processing of combining the receiving signal received at different antenna elements using phase shifters is also known as analog combining.

If the transmitter is using a certain transmit beam, the signal may arrive at the receiver from a certain direction, the direction of arrival (DoA). If the receiver has information about the incoming signal DoA, the receiver can choose the best receive beam based on the DoA information. The best receive beam may be the receive beam that maximizes the beamforming gain in the direction of arrival.

In Line-Of-Sight scenarios, if the location information of the transmitter is known to the receiver, the receiver can use this information to determine the azimuth and elevation angles of the incoming signal direction and select the receive beam to receive further incoming signals from the transmitter based on this information.

US 2012/058763 A1 discloses a UE and an access method thereof. A relative speed between a UE and each access point is calculated. The access point is selected to establish a communication connection if the relative speed between the UE and the access point is smaller than a threshold speed. Therefore, a beneficial effect that the UE can be handed over in time between the mobile access point and the fixed access point is achieved.

US 2013/059589 A1 discloses a method which includes determining, by a user equipment, a stable average of a signal characteristic of a signal from a mobile access point. The method also includes limiting handover of the user equipment based on the stable average.

US 2016/302142 A1 discloses a method for selecting a cell of a wireless cellular communication network having a plurality of cells.

US 2013/084884 A1 discloses a method in a radio network node of a cellular network, for controlling admission of a UE in a cell covering a region.

US 2015/334614 A1 discloses a control of handover of User Equipment (UE) between a first base station of a first type and a second base station of a second, different type in a cellular network. At least one handover parameter is configured at one or more of: the UE, the first base station, and the second base station, on the basis of the first type and the second type.

WO 2013/025166 A1 discloses that a mobility state of a mobile relay node is determined as one of three or more different mobility states. The mobile relay node may determine the mobility state itself or based on received information from another network node. Control information is determined based on the determined mobility state of the mobile relay node and an action is then performed or initiated based on the determined control information.

EP 1 138 164 A2 discloses an arrangement for providing mobile stations in a mobile vehicle with radio coverage.

US 2017/302368 A1 discloses a method of receiving a target position and a target orientation of an airborne base station, predicting a target signal quality of the airborne base station at the target position and the target orientation based on at least one previous signal quality of the airborne base station corresponding to at least one previous position and at least one previous orientation of the airborne base station relative to the ground reference.

US 2006/223573 A1 discloses a station-to-station handoff using an adaptive or directional antenna.

US 2009/046006 A1 discloses a directional communication apparatus whose low power consumption is realized, a communication system using this apparatus, a directional communication apparatus where time up to establishment of communication after restart of the communication is shortened, and a communication system using this apparatus.

JP 2002 1521 14 A discloses a communication system in which a receiver collects receiver position information, a velocity vector, the position information of a base station close to a receiving spot from the base station and data such as the direction of an antenna capable of reception close to the receiving spot.

US 2015/0045048 A1 discloses wireless communication systems and methods in which a network device may establish a connection with a user device within a wireless network. Through this connection, location information regarding the user device is received. Based on the received location information, a second network device may be configured to beamform a high-frequency communication transmission session with the user device.

## Summary

An objective of embodiments of the invention is to provide a solution which mitigates or solves the drawbacks and problems of conventional solutions.

The above and further objectives are solved by the subject matter of the independent claims. Further advantageous embodiments of the invention can be found in the dependent claims.

In this disclosure the term mobile network access node can be interpreted to mean a network access node which is capable of moving, e.g. not installed in a fixed location. The network access node may e.g. be installed in or on a vehicle such as a bus or a train and thereby move with the vehicle. In this way, the network access node is moving when the vehicle is moving and is stationary when the vehicle stands still. Hence, that a network access node is a mobile network access node implies that the network access node can move but may not indicate the current movement status of the network access node.

An advantage of the first network access node according to the invention is that by transmitting the mobility information associated with the network access node to a client device, the first network access node can facilitate an improved service quality at the client device, as the mobility information helps the client device to take appropriate actions related to receive beam management and cell selection. Furthermore, the transmission of the mobility information associated with the network access node to a further network access node allows mobility information to be exchanged between network access nodes. Hence, a network access node can obtain mobility information associated with a neighboring network access node and provide said mobility information to one or more of its client devices.

The operator controlled network access node can be a network access node providing access to a registered client device using a wireless communication network of the operator.

The mobility information can further indicate the current movement status of the network access node, i.e. if the network access node is currently moving or if the network access node is currently stationary.

An advantage is that by indicating the current mobility information of the network access node, the first network access node provides the client device with accurate location information of the network access node. Thereby, the client device can take appropriate actions related to receive beam management and cell selection towards the network access node.

An advantage is that by indicating the velocity and direction of movement information of the network access node, the first network access node provides the client device with accurate current and future location information of the network access node. Thereby, the client device can take appropriate actions related to receive beam management and cell selection towards the network access node.

An advantage is that by transmitting the first control message with different periodicities, the first network access node can obtain a trade-off between resource utilization and providing accurate mobility information of the network access node to the client device.

An advantage is that by indicating geographical location information along with the velocity and direction of movement of the network access node, the first network node provides the client device with current and future geographical location information of the network access node. Thereby, the client device can perform efficient receive beam management.

An advantage is that the first network access node has the flexibility to send the first control message to all client devices or only to client devices capable of performing receive beamforming, thereby achieving better transmission efficiency.

An advantage is that the first network access node can save control channel resources by not transmitting the first control message if the propagation channel between the network access node and the client device does not satisfy certain criteria.

A Line-of-Sight characteristic can in this disclosure be understood to mean a characteristic indicating whether the propagation channel between the network access node and the client device corresponds to a Line-of-Sight path. For example, based on a comparison of a pre-defined metric associated with the propagation channel with a pre-defined threshold value, the Line-of-Sight characteristic can be determined to correspond to a Line-of-Sight path or to correspond to a non-Line-of-Sight path.

An advantage is that if the propagation channel between the network access node and the client device is a non-Line-of-Sight path, the first network access node need not transmit the first control message to the client device, thereby saving control channel resources.

An advantage is that the first network access node provides its own mobility information to the client device, thereby allowing the client device to perform efficient beam management towards the first network access node.

An advantage is that the first network access node can easily obtain the mobility information from the motion sensors, without utilizing its own processor to obtain the mobility information. The first network access node can thereby save processing resources.

Further applications and advantages of the embodiments of the invention will be apparent from the following detailed description.

**Brief Description of the Drawings**

The appended drawings are intended to clarify and explain different embodiments of the invention, in which:

- Fig. 1 shows a first network access node according to an embodiment of the invention;
- Fig. 2 shows a method according to an embodiment of the invention;
- Fig. 3 shows a client device not being part of the invention;
- Fig. 4 shows a method not being part of the invention;
- Fig. 5 shows a wireless communication system according to an embodiment of the invention.

**Detailed Description**

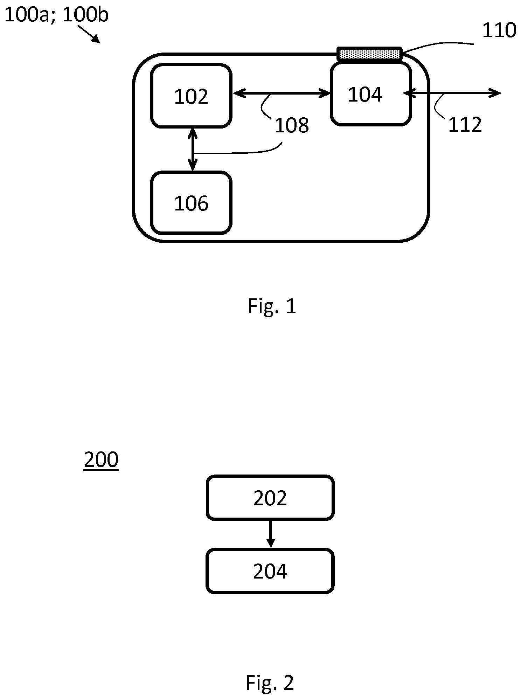

Fig. 1 shows a network access node 100a; 100b according to an embodiment of the invention. In the embodiment shown in Fig. 1, the network access node 100a; 100b comprises a processor 102, a transceiver 104 and a memory 106. The processor 102 is coupled to the transceiver 104 and the memory 106 by communication means 108 known in the art. The network access node 100a; 100b may be configured for both wireless and wired communications in wireless and wired communication systems, respectively. The wireless communication capability is provided with an antenna array 110 coupled to the transceiver 104, while the wired communication capability is provided with a wired communication interface 112 coupled to the transceiver 104.

That the network access node 100a; 100b is configured to perform certain actions should in this disclosure be understood to mean that the first network access node 100a comprises suitable means, such as e.g. the processor 102 and the transceiver 104, configured to perform said actions.

According to embodiments of the invention a first network access node 100a is configured to obtain mobility information associated with a network access node 100a; 100b. The mobility information indicates if the network access node 100a; 100b is a mobile network access node, i.e. if the network access node 100a; 100b is capable of moving. The first network access node 100a is further configured to transmit a first control message 502 to at least one of a client device 300 and a further network access node, wherein the first control message 502 indicates the mobility information.

Fig. 2 shows a flow chart of a corresponding method 200 which may be executed in a first network access node 100a, such as the one shown in Fig. 1. The method 200 comprises obtaining 202 mobility information associated with a network access node 100a; 100b, wherein the mobility information indicates if the network access node 100a; 100b is a mobile network access node. The method 200 further comprises transmitting 204 a first control message 502 to at least one of a client device 300 and a further network access node, wherein the first control message 502 indicates the mobility information.

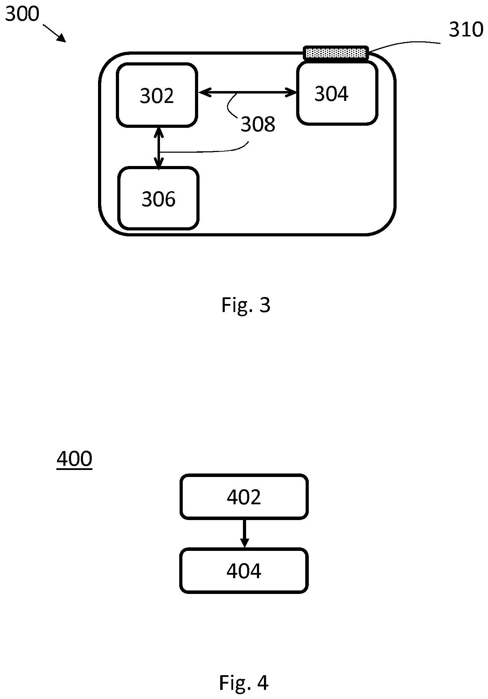

Fig. 3 shows a client device 300 not being part of the invention. In Fig. 3, the client device 300 comprises a processor 302, a transceiver 304 and a memory 306. The processor 302 is coupled to the transceiver 304 and the memory 306 by communication means 308 known in the art. The client device 300 further comprises an antenna array 310 coupled to the transceiver 304, which means that the client device 300 is configured for wireless communications in a wireless communication system.

That the client device 300 is configured to perform certain actions should in this disclosure be understood to mean that the client device 300 comprises suitable means, such as e.g. the processor 302 and the transceiver 304, configured to perform said actions.

The client device 300 is configured to receive a first control message 502 indicating mobility information associated with a network access node 100a; 100b. The mobility information indicates if the network access node 100a; 100b is a mobile network access node, i.e. if the network access node 100a; 100b is capable of moving. The client device 300 is further configured to perform at least one of a receive beam selection and a cell selection based on the mobility information indicated in the first control message 502.

Fig. 4 shows a flow chart of a corresponding method 400 which may be executed in a client device 300, such as the one shown in Fig. 3, wherein said method is not part of the invention. The method 400 comprises receiving 402 a first control message 502 indicating mobility information associated with a network access node 100a; 100b, wherein the mobility information indicates if the network access node 100a; 100b is a mobile network access node. The method 400 further comprises performing 404 at least one of a receive beam selection and a cell selection based on the mobility information indicated in the first control message 502.

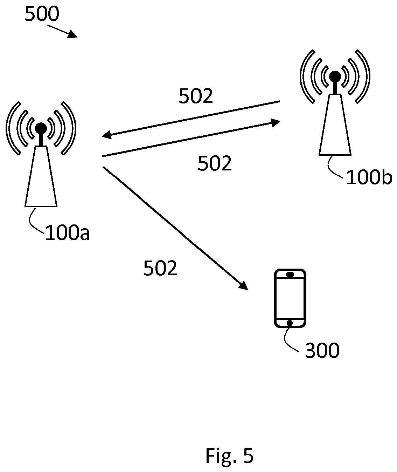

Fig. 5 shows a wireless communication system 500 according to an embodiment of the invention. The wireless communication system 500 comprises a first network access node 100a, a second network access node 100b, and a client device 300 configured to communicated with each other over the wireless communication system 500. The first network access node 100a and the second network access node 100b may be operator controlled network access nodes for providing access to an operator controlled network to registered client devices, such as the first client device 300, using the wireless communication system 500 of an operator. For simplicity, the wireless communication system 500 shown in Fig. 5 only comprises one first network access node 100a, one second network access node 100b, and one client device 300. However, the wireless communication system 500 may comprise any number of first network access nodes 100, second network access nodes 100b, and client devices 300 without deviating from the scope of the invention.

The first network access node 100a and second network access node 100b shown in Fig. 5 can be mobile network access nodes. That a network access node is a mobile network access node can herein be interpreted to mean that the network access node is capable of moving. The network access node may e.g. be installed in or on a vehicle such as a train or a bus and thereby move with the vehicle. In this way, the network access node is moving when the vehicle is moving and is stationary when the vehicle stands still. Hence, that a network access node is a mobile network access node implies that the network access node can move but may not indicate the current movement status of the network access node.

If the location information of the first network access node 100a and second network access node 100b is known to the client device 300, the client device 300 can use this information to select a suitable cell or a suitable receive beam to use for communication with the first network access node 100a and/or the second network access node 100b. For example, if the client device 300 receives the location information of the first network access node 100a as ($x2$, $y2$, $z2$) in the x, y and z plane and obtains its own location information as ($x1$, $y1$, $z1$), the client device 300 can determine the direction of arrival (DoA) of an incoming signal from the first network access node 100a in the azimuth plane as:

$$\hat{\phi} = \tan^{-1}\left(\frac{y2 - y1}{x2 - x1}\right), \phi \in (-\pi, \pi] \quad (1)$$

Similarly, the client device 300 can obtain the DoA of the incoming signal in the elevation plane as:

$$\hat{\theta} = \cos^{-1}\left(\frac{z2 - z1}{\sqrt{(x2 - x1)^2 + (y2 - y1)^2 + (z2 - z1)^2}}\right), \theta \in (-\pi, \pi] \quad (2)$$

Once the DoA of the incoming signal is obtained, the client device 300 can select a suitable receive beam to receive further incoming signals from the first network access node 100a based on $\hat{\phi}$ and $\hat{\theta}$.

However, when the first network access node 100a is a mobile network access node, the location information of the first network access node 100a alone may not be sufficient to determine DoA of the incoming signal direction. By the time, the client device 300 uses the receive beam selected based on the location information of the first network access node 100a, the position of the first network access node 100a might have changed. Hence, in environments with mobile network access nodes, the client device 300 may need further information related to the mobility of the network access node to select a suitable receive beam.

According to embodiments of the invention, mobility information associated with network access nodes 100a; 100b may therefore be exchanged in the wireless communication system 500. Fig. 5 shows an embodiment where the first network access node 100a transmits a first control message 502 comprising mobility information associated with a network access node 100a; 100b to the first client device 300. The first network access node 100a may transmit the first control message 502 to the first client device 300 using one of a broadcast signal, a multicast signal, or unicast signal. When a broadcast signal is used, the mobility information can be sent as a part of other system information (OSI) or in a system information broadcast (SIB) message. In this case, the first control message 502 can be received by all client devices in the cell of first network access node 100a. When a multicast signal or a unicast signal is used, the mobility information can be transmitted to a set of client devices or to a specific client device. The mobility information may in this case only be transmitted to a specific type of client devices, e.g. only client devices capable of performing receive beamforming. Furthermore, the mobility information can be transmitted to client devices using common control channel space or client device specific control channel space, or as a higher layer message, such as radio resource control (RRC) signalling.

The mobility information provided by the first network access node 100a to the client device 300 in the first control message 502 is associated with a network access node 100a; 100b. The network access node 100a; 100b may be the first network access node 100a or the second network access node 100b in communication with the first network access node 100a. Furthermore, the mobility information provided by the first network access node 100a to the client device 300 in the first control message 502 may be associated with both the first network access node 100a and the second network access node 100b, as well as with further network nodes without deviating from the scope of the invention. The communication between the network access nodes 100a; 100b may be performed using suitable communication interfaces e.g. via backhaul.

In embodiments where the first network access node 100a provides mobility information associated with itself, the first network access node 100a may obtain the mobility information from motion sensors. For example, the first network access node 100a may comprise a motion sensor and may determine the mobility information based on a measurement of the motion sensor.

In embodiments where the first network access node 100a provides mobility information associated with the second network access node 100b in communication with the first network access node 100a, the first network access node 100a may obtain the mobility information by receiving the mobility information from the second network access node 100b. The mobility information may e.g. be received in a first control message 502 from the second network access node 100b over a backhaul connection. Hence, according to embodiments of the invention mobility information may further be exchanged between network access nodes using backhaul communication. For example, the first network access node 100a may transmit its own mobility information in a first control message 502 to the second network access node 100b, and the second network access node 100b may transmit its own mobility information in a first control message 502 to the first network access node 100a, as shown in Fig. 5. In addition, the first network access node 100a may transmit its own mobility information and/or the mobility information of the second network access node 100b in a first control message 502 to a further network access node (not shown in Figs.).

The mobility information associated with a network access node 100a; 100b indicates if the network access node 100a; 100b is a mobile network access node. In this way, a client device 300 which has received the mobility information associated with the network access node 100a; 100b and which detects the network access node 100a; 100b, e.g. in a cell scanning procedure, may know whether it is worthwhile to connect to the network access node 100a; 100b or not. For example, a client device 300 which is currently stationary may not want to connect to a mobile network node, as a mobile network access node may be moving or start to move in a near future.

To provide additional information to the receiver of the mobility information, the mobility information may further indicate if the network access node 100a; 100b is moving or stationary. Furthermore, when the mobility information indicates that the network access node 100a; 100b is moving, the mobility information may further indicate at least one of a velocity and a direction of movement of the network access node 100a; 100b. In the embodiment shown in Fig. 5, this means that the first network access node 100a may provide the current movement status of the network access node 100a; 100b to the client device 300, i.e. information indicating if the network access node 100a; 100b currently is moving or stationary. Furthermore, when the network access node 100a; 100b is moving, the first network access node 100a may provide the velocity and the direction of movement of the network access node 100a; 100b to the client device 300. The client device 300 may use the received current movement status and/or the velocity and the direction of movement of the network access node 100a; 100b to decide whether to connect to the network access node 100a; 100b or not. For example, a client device 300 which is moving in a first direction may only connect to the network access node 100a; 100b if the network access node 100a; 100b is also moving in the first direction or a direction which is close to the first direction. The client device 300 may further check the velocity of movement of the network access node 100a; 100b and connect to the network access node 100a; 100b if the client device 300 and the network access node 100a; 100b are travelling at approximately the same speed.

To provide up-to-date mobility information, the first network access node 100a may transmit the first control message 502 in a periodic manner with a periodicity which may be predefined. The periodicity may depend on the movement status of the network access node 100a; 100b such that the first control message 502 is transmitted more frequently when the network access node 100a; 100b is moving than when the network access node 100a; 100b is stationary. In other words, the first network access node 100a may transmit the first control message 502 with a first periodicity if the mobility information indicates that the network access node 100a; 100b is moving and transmit the first control message 502 with a second periodicity if the mobility information indicates that the network access node 100a; 100b is stationary. The first periodicity may be shorter than the second periodicity according to embodiments. For example, the first periodicity may result in a first control message 502 being transmitted every 5-50 ms, while the second periodicity may result in a first control message 502 being transmitted every 100-1000 ms. The periodicity may further depend on the velocity of the network access node 100a; 100b such that the first control message 502 is transmitted more frequently for high velocities than for low velocities. In embodiments, the first control message 502 may comprise information about the periodicity used. In this way, the receiver of the first control message 502, e.g. the client device 300, knows when to expect the next first control message 502.

Moreover, the mobility information may further indicate a geographical location of the network access node 100a; 100b. The geographical location may be expressed in global coordinates and may e.g. comprise longitude, latitude and elevation information. Furthermore, the geographical location of the network access node 100a; 100b may be obtained using positioning sensors in or associated with the network access node 100a; 100b. The positioning sensors may be associated with global positioning system (GPS), global navigation satellite system (GLONASS), Galileo system etc. For indoor scenarios, where both the network access node 100a; 100b and the client device 300 are indoors, the geographical location may be obtained using an indoor positioning system (IPS). When the mobility information indicates a geographical location of the first network access node 100a, the client device 300 may obtain the DoA of the incoming signal in the azimuth and elevation planes and select a suitable receive beam based on the obtained DoA information, as previously described. Furthermore, by combining the geographical location information with mobility information indicating whether the first network access node 100a is moving and with which velocity and direction, the client device 300 may compute the current and future geographical location of the first network access node 100a and obtain the current and future DoA of the incoming signal in the azimuth and elevation planes. Based on the obtained DoA information of the incoming signal, the client device 300 may hence select a suitable receive beam for receiving further incoming signals from the first network access node 100a.

According to embodiments of the invention the first network access node 100a may transmit the first control message 502 to the client device 300 based on a characteristic of a propagation channel between the network access node 100a; 100b and the client device 300. Prior to transmitting the first control message 502 to the client device 300, the first network access node 100a may obtain a characteristic of a propagation channel between the network access node 100a; 100b and the client device 300. Based on the obtained characteristic of the propagation channel, the first network access node 100a transmits the first control message 502 to the client device 300. For example, if the obtained characteristic fulfills certain criteria, the first control message 502 will be transmitted, while if the criteria are not fulfilled the first control message 502 will not be transmitted. The characteristic of the propagation channel between the network access node 100a; 100b and the client device 300 may be a Line-of-Sight characteristic. A Line-of-Sight characteristic can in this disclosure be understood to mean a characteristic indicating whether the propagation channel between the network access node 100a; 100b and the client device 300 corresponds to a Line-of-Sight path. When the propagation channel is a propagation channel between the first network access node 100a and the client device 300, the first network access node 100a may obtain the Line-of-Sight characteristic of the propagation channel based on a predefined metric obtained from an estimation of the propagation channel. The metric may e.g. be any of a root-mean-square delay spread, a frequency selectivity, and a Rician factor. By comparing the predefined metric associated with the propagation channel against a predefined threshold value, the Line-of-Sight characteristic can be determined to correspond to a Line-of-Sight path or to correspond to a non-Line-of-Sight path. When the propagation channel is a propagation channel between the second network access node 100b and the client device 300, the first network access node 100a may obtain the Line-of-Sight characteristic of the propagation channel from the second network access node 100b. The second network access node 100b may obtain the Line-of-Sight characteristic of the propagation channel in a similar way as described for the first network access node 100a, i.e. by comparing an obtained predefined metric associated with the propagation channel between the second network access node 100b the client device 300 against a predefined threshold value.

As described above, the first control message 502 may indicate mobility information where the mobility information may comprise different types of information related to the mobility of a network access node 100a; 100b. The mobility information in the first control message 502 may be quantized in certain intervals and each interval can be indicated using a bit representation, e.g. bit mapping or similar.

A client device 300 that receives a first control message 502 indicating mobility information associated with a network access node 100a; 100b may perform at least one of a receive beam selection and a cell selection based on the mobility information indicated in the first control message 502. In the embodiment shown in Fig. 5, the client device 300 receives the first control message 502 from the first network access node 100a. As previously described, the first control message 502 received from the first network access node 100a may indicate mobility information associated with the first network access node 100a and/or mobility information associated with the second network access node 100b. The mobility information may indicate if the network access node 100a; 100b is a mobile network access node, as well as if the network access node 100a; 100b currently is moving or stationary. If the mobility information indicates that the network access node 100a; 100b is moving, the mobility information may further indicate at least one of a velocity and a direction of movement of the network access node 100a; 100b. Furthermore, the mobility information may indicate a geographical location of the network access node 100a; 100b.

Based on the information indicated in the received mobility information, the client device 300 may perform receive beam selection and/or cell selection. For example, when the received first control message 502 indicates mobility information associated with the first network access node 100a, the client device 300 may use the mobility information to select a receive beam towards the first network access node 100a. If the mobility information indicates a geographical location of the first network access node 100a, as well as that the first network access node 100a is moving with a certain velocity and a certain direction, the client device 300 may compute the current and future geographical location of the first network access node 100a and obtain the current and future DoA of the incoming signal in the azimuth and elevation planes. Based on the obtained DoA information of the incoming signal, the client device 300 may select a suitable receive beam for receiving further incoming signals from the first network access node 100a.

In scenarios where the client device 300 is not yet connected to a network access node 100a; 100b, the client device 300 may use the mobility information received in a first control message 502 when performing initial access. Hence, the client device 300 may determine to connect, i.e. to perform a cell selection, to a network access node 100a; 100b based on the mobility information associated with the network access node 100a; 100b. In this way, the client device 300 may e.g. determine to only select a cell of the network access node 100a; 100b if the network access node 100a; 100b is stationary.

In addition to the mobility information associated with the network access node 100a; 100b, the client device 300 may considered its own movement status when performing receive beam selection and/or cell selection based on the mobility information. In embodiments, the client device 300 may hence obtain mobility information associated with the client device 300, wherein the mobility information indicates if the client device 300 currently is moving or is stationary. The mobility information associated with the client device 300 may e.g. be obtained from motion sensors comprised in or associated with the client device 300. Based on the mobility information associated with the client device 300, the client device 300 may perform at least one of the receive beam selection and the cell selection. The mobility information associated with the client device 300 may further indicate a velocity and a direction of the movement of the client device 300, as well as a geographical location of the client device 300. In this way, a moving client device 300 may determine that its own movement is aligned with that of a moving network access node 100a; 100b and therefore anchor to the network access node 100a; 100b.

The client device 300 herein, may be denoted as a user device, a User Equipment (UE), a mobile station, an internet of things (IoT) device, a sensor device, a wireless terminal and/or a mobile terminal, is enabled to communicate wirelessly in a wireless communication system, sometimes also referred to as a cellular radio system. The UEs may further be referred to as mobile telephones, cellular telephones, computer tablets or laptops with wireless capability. The UEs in this context may be, for example, portable, pocket-storable, hand-held, computer-comprised, or vehicle-mounted mobile devices, enabled to communicate voice and/or data, via the radio access network, with another entity, such as another receiver or a server. The UE can be a Station (STA), which is any device that contains an IEEE 802.11-conformant Media Access Control (MAC) and Physical Layer (PHY) interface to the Wireless Medium (WM). The UE may also be configured for communication in 3GPP related LTE and LTE-Advanced, in WiMAX and its evolution, and in fifth generation wireless technologies, such as New Radio.

The network access node 100a; 100b herein may also be denoted as a radio client device, an access client device, an access point, or a base station, e.g. a Radio Base Station (RBS), which in some networks may be referred to as transmitter, "gNB", "gNodeB", "eNB", "eNodeB", "NodeB" or "B node", depending on the technology and terminology used. The radio client devices may be of different classes such as e.g. macro eNodeB, home eNodeB or pico base station, based on transmission power and thereby also cell size. The radio client device can be a Station (STA), which is any device that contains an IEEE 802.11-conformant Media Access Control (MAC) and Physical Layer (PHY) interface to the Wireless Medium (WM). The radio client device may also be a base station corresponding to the fifth generation (5G) wireless systems.

Furthermore, any method according to embodiments of the invention may be implemented in a computer program, having code means, which when run by processing means causes the processing means to execute the steps of the method. The computer program is included in a computer readable medium of a computer program product. The computer readable medium may comprise essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that embodiments of the network access node 100a; 100b and the client device 300 comprises the necessary communication capabilities in the form of e.g., functions, means, units, elements, etc., for performing the solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, MSDs, TCM encoder, TCM decoder, power supply units, power feeders, communication interfaces, communication protocols, etc. which are suitably arranged together for performing the solution.

Especially, the processor(s) of the network access node 100a; 100b and the client device 300 may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

Finally, it should be understood that the invention is not limited to the embodiments described above, but also relates to and incorporates all embodiments within the scope of the appended independent claims.

**Claims**

1. A first network access node (100a) for a wireless communication system (500), the first network access node (100a) being configured to

    obtain mobility information associated with a network access node (100a; 100b), wherein the mobility information indicates if the network access node (100a; 100b) is a mobile network access node;
    transmit a first control message (502) to a client device (300), wherein the first control message (502) indicates the mobility information,

        wherein the mobility information further indicates if the network access node (100a; 100b) is moving or stationary,
        the first network access node (100a) is configured to

    transmit the first control message (502) with a first periodicity if the mobility information indicates that the network access node (100a; 100b) is moving, and
    transmit the first control message (502) with a second periodicity if the mobility information indicates that the network access node (100a; 100b) is stationary, wherein the first periodicity is shorter than the second periodicity,

    **characterized in that** the first control message (502) comprises information about a periodicity with which the first control message (502) is transmitted.

2. The first network access node (100a) according to claim 1, wherein the network access node (100a; 100b) to which the mobility information is associated is an operator controlled network access node.

3. The first network access node (100a) according to claim 1, wherein the mobility information further indicates at least one of a velocity and a direction of movement of the network access node (100a; 100b) if the mobility information indicates that the network access node (100a; 100b) is moving.

4. The first network access node (100a) according to any of the preceding claims, wherein the mobility information further indicates a geographical location of the network access node (100a; 100b).

5. The first network access node (100a) according to any of the preceding claims, wherein the network access node (100a) is the first network access node (100a).

6. The first network access node (100a) according to claim 5, comprising a motion sensor and configured to determine the mobility information based on a measurement of the motion sensor.

7. A method (200) for a first network access node (100a), the method (200) comprising

    obtaining (202) mobility information associated with a network access node (100a; 100b), wherein the mobility information indicates if the network access node (100a; 100b) is a mobile network access node;
    transmitting (204) a first control message (502) to a client device (300), wherein the first control message (502) indicates the mobility information,

        wherein the mobility information further indicates if the network access node (100a; 100b) is moving or stationary,
        the first network access node (100a)

    transmits the first control message (502) with a first periodicity if the mobility information indicates that the network access node (100a; 100b) is moving, and
    transmits the first control message (502) with a second periodicity if the mobility information indicates that the network access node (100a; 100b) is stationary, wherein the first periodicity is shorter than the second periodicity,
    **characterized in that** the first control message (502) comprises information about a periodicity with which the first control message (502) is transmitted.

8. A computer program with a program code for performing a method according to claim 7 when the computer program runs on the first network access node (100a).

## EP 3 777 342 B1

**Patentansprüche**

1. Erster Netzzugangsknoten (100a) für ein drahtloses Kommunikationssystem (500), wobei der erste Netzzugangsknoten (100a) dazu konfiguriert ist,

   Mobilitätsinformationen zu erlangen, die einem Netzzugangsknoten (100a; 100b) zugeordnet sind, wobei die Mobilitätsinformationen anzeigen, ob der Netzzugangsknoten (100a; 100b) ein mobiler Netzzugangsknoten ist; eine erste Steuernachricht (502) an eine Client-Vorrichtung (300) zu übertragen, wobei die erste Steuernachricht (502) die Mobilitätsinformationen anzeigt,
   wobei die Mobilitätsinformationen ferner anzeigen, ob sich der Netzzugangsknoten (100a; 100b) bewegt oder stationär ist, wobei der erste Netzzugangsknoten (100a) dazu konfiguriert ist,
   die erste Steuernachricht (502) mit einer ersten Periodizität zu übertragen, falls die Mobilitätsinformationen anzeigen, dass sich der Netzzugangsknoten (100a; 100b) bewegt, und
   die erste Steuernachricht (502) mit einer zweiten Periodizität zu übertragen, falls die Mobilitätsinformationen anzeigen, dass der Netzzugangsknoten (100a; 100b) stationär ist, wobei die erste Periodizität kürzer ist als die zweite Periodizität, **dadurch gekennzeichnet, dass** die erste Steuernachricht (502) Informationen über eine Periodizität umfasst, mit der die erste Steuernachricht (502) übertragen wird.

2. Erster Netzzugangsknoten (100a) gemäß Anspruch 1, wobei der Netzzugangsknoten (100a; 100b), dem die Mobilitätsinformationen zugeordnet sind, ein betreibergesteuerter Netzzugangsknoten ist.

3. Erster Netzzugangsknoten (100a) gemäß Anspruch 1, wobei die Mobilitätsinformationen ferner mindestens eines von einer Geschwindigkeit und einer Richtung der Bewegung des Netzzugangsknotens (100a; 100b) anzeigen, falls die Mobilitätsinformationen anzeigen, dass sich der Netzzugangsknoten (100a; 100b) bewegt.

4. Erster Netzzugangsknoten (100a) gemäß einem der vorhergehenden Ansprüche, wobei die Mobilitätsinformationen ferner einen geografischen Standort des Netzzugangsknotens (100a; 100b) anzeigen.

5. Erster Netzzugangsknoten (100a) gemäß einem der vorhergehenden Ansprüche, wobei der Netzzugangsknoten (100a) der erste Netzzugangsknoten (100a) ist.

6. Erster Netzzugangsknoten (100a) gemäß Anspruch 5, umfassend einen Bewegungssensor und dazu konfiguriert, die Mobilitätsinformationen basierend auf einer Messung des Bewegungssensors zu bestimmen.

7. Verfahren (200) für einen ersten Netzzugangsknoten (100a), wobei das Verfahren (200) Folgendes umfasst

   Erlangen (202) von Mobilitätsinformationen, die einem Netzzugangsknoten (100a; 100b) zugeordnet sind, wobei die Mobilitätsinformationen anzeigen, ob der Netzzugangsknoten (100a; 100b) ein mobiler Netzzugangsknoten ist;
   Übertragen (204) einer ersten Steuernachricht (502) an eine Client-Vorrichtung (300), wobei die erste Steuernachricht (502) die Mobilitätsinformationen anzeigt,
   wobei die Mobilitätsinformationen ferner anzeigen, ob sich der Netzzugangsknoten (100a; 100b) bewegt oder stationär ist, wobei der erste Netzzugangsknoten (100a)
   die erste Steuernachricht (502) mit einer ersten Periodizität überträgt, falls die Mobilitätsinformationen anzeigen, dass sich der Netzzugangsknoten (100a; 100b) bewegt, und
   die erste Steuernachricht (502) mit einer zweiten Periodizität überträgt, falls die Mobilitätsinformationen anzeigen, dass der Netzzugangsknoten (100a; 100b) stationär ist, wobei die erste Periodizität kürzer ist als die zweite Periodizität, **dadurch gekennzeichnet, dass** die erste Steuernachricht (502) Informationen über eine Periodizität umfasst, mit der die erste Steuernachricht (502) übertragen wird.

8. Computerprogramm mit einem Programmcode zum Durchführen eines Verfahrens gemäß Anspruch 7 bei Ausführung des Computerprogramms auf dem ersten Netzzugangsknoten (100a).

**Revendications**

1. Premier noeud d'accès au réseau (100a) pour un système de communication sans fil (500), le premier noeud d'accès au réseau (100a) étant configuré pour

obtenir des informations de mobilité associées à un noeud d'accès au réseau (100a ; 100b), dans lequel les informations de mobilité indiquent si le noeud d'accès au réseau (100a ; 100b) est un noeud d'accès au réseau mobile ;

transmettre un premier message de commande (502) à un dispositif client (300), dans lequel le premier message de commande (502) indiquent les informations de mobilité,

dans lequel les informations de mobilité indiquent en outre si le noeud d'accès au réseau (100a ; 100b) est en mouvement ou stationnaire,

le premier noeud d'accès au réseau (100a) est configuré pour transmettre le premier message de commande (502) avec une première périodicité si les informations de mobilité indiquent que le noeud d'accès au réseau (100a ; 100b) se déplace, et transmettre le premier message de commande (502) avec une seconde périodicité si les informations de mobilité indiquent que le noeud d'accès au réseau (100a ; 100b) est stationnaire, dans lequel la première périodicité est plus courte que la seconde périodicité,

**caractérisé en ce que** le premier message de commande (502) comprend des informations concernant une périodicité avec laquelle le premier message de commande (502) est transmis.

2. Premier noeud d'accès au réseau (100a) selon la revendication 1, dans lequel le noeud d'accès au réseau (100a ; 100b) auquel les informations de mobilité sont associées est un noeud d'accès au réseau commandé par un opérateur.

3. Premier noeud d'accès au réseau (100a) selon la revendication 1, dans lequel les informations de mobilité indiquent en outre au moins l'une d'une vitesse et d'une direction de mouvement du noeud d'accès au réseau (100a ; 100b) si les informations de mobilité indiquent que le noeud d'accès au réseau (100a ; 100b) se déplace.

4. Premier noeud d'accès au réseau (100a) selon l'une quelconque des revendications précédentes, dans lequel les informations de mobilité indiquent en outre un emplacement géographique du noeud d'accès au réseau (100a ; 100b).

5. Premier noeud d'accès au réseau (100a) selon l'une quelconque des revendications précédentes, dans lequel le noeud d'accès au réseau (100a) est le premier noeud d'accès au réseau (100a).

6. Premier noeud d'accès au réseau (100a) selon la revendication 5, comprenant un capteur de mouvement et configuré pour déterminer les informations de mobilité sur la base d'une mesure du capteur de mouvement.

7. Procédé (200) pour un premier noeud d'accès au réseau (100a), le procédé (200) comprenant

l'obtention (202) d'informations de mobilité associées à un noeud d'accès au réseau (100a ; 100b), dans lequel les informations de mobilité indiquent si le noeud d'accès au réseau (100a ; 100b) est un noeud d'accès au réseau mobile ;

la transmission (204) d'un premier message de commande (502) à un dispositif client (300), dans lequel le premier message de commande (502) indique les informations de mobilité,

dans lequel les informations de mobilité indiquent en outre si le noeud d'accès au réseau (100a ; 100b) est en mouvement ou stationnaire,

le premier noeud d'accès au réseau (100a)

transmet le premier message de commande (502) avec une première périodicité si les informations de mobilité indiquent que le noeud d'accès au réseau (100a ; 100b) se déplace, et

transmet le premier message de commande (502) avec une seconde périodicité si les informations de mobilité indiquent que le noeud d'accès au réseau (100a ; 100b) est stationnaire, dans lequel la première périodicité est plus courte que la seconde périodicité,

**caractérisé en ce que** le premier message de commande (502) comprend des informations concernant une périodicité avec laquelle le premier message de commande (502) est transmis.

8. Programme informatique avec un code de programme pour réaliser un procédé selon la revendication 7 lorsque le programme informatique s'exécute sur le premier noeud d'accès au réseau (100a).

Fig. 1

Fig. 2

300

310

302

304

308

306

Fig. 3

400

402

404

Fig. 4

Fig. 5

**REFERENCES CITED IN THE DESCRIPTION**

**Patent documents cited in the description**

- US 2012058763 A1
- US 2013059589 A1
- US 2016302142 A1
- US 2013084884 A1
- US 2015334614 A1
- WO 2013025166 A1
- EP 1138164 A2
- US 2017302368 A1
- US 2006223573 A1
- US 2009046006 A1
- JP 2002152114 A
- US 20150045048 A1